# EUROPEAN PATENT APPLICATION

(11) **EP 3 196 419 A1**
(43) Date of publication of application: **26.07.2017**
(21) Application number: 17152514.0
(22) Date of filing: 20.01.2017
(51) Int. Cl.: F01D 11/12

(54) **BLADE OUTER AIR SEAL HAVING SURFACE LAYER WITH POCKETS**

(30) Priority: 25.01.2016 US 201615005318
(71) Applicant: United Technologies Corporation, Farmington, CT 06032 (US)
(72) Inventor: McCAFFREY, Michael G., Windsor, CT Connecticut 06095 (US); SNYDER, Brooks E., Dartmouth, Nova Scotia B3A 2M9 (CA)
(74) Representative: Leckey, David Herbert

(57) **Abstract**

A blade outer air seal (60) includes a seal arc segment (66; 166) that has a surface layer (80) and an array of internal pockets (82). The surface layer (80) defines a radially inner side (68) of the seal arc segment (66;166). The surface layers (80) conformal with the array of internal pockets (82) such that the surface layer (80) includes an array of ridges (84;184;284) that correspond in location and shape to the array of internal pockets (82).

## Description

### BACKGROUND

A gas turbine engine typically includes at least a compressor section, a combustor section and a turbine section. The compressor section pressurizes air into the combustion section where the air is mixed with fuel and ignited to generate an exhaust gas flow. The exhaust gas flow expands through the turbine section to drive the compressor section and, if the engine is designed for propulsion, a fan section.

The turbine section may include multiple stages of rotatable blades and static vanes. An annular shroud may be provided around the blades in close radial proximity to the tips of the blades to reduce the amount of gas flow that escapes around the blades. The shroud typically includes a plurality of arc segments that are circumferentially arranged. The arc segments may be abradable to reduce the radial gap with the tips of the blades.

### SUMMARY

A blade outer air seal according to an example of the present disclosure includes a seal arc segment that has a surface layer and an array of internal pockets. The surface layer defines a radially inner side of the seal arc segment. The surface layer is conformal with the array of internal pockets such that the surface layer includes an array of ridges corresponding in location and shape to the array of internal pockets.

In an embodiment of the foregoing embodiment, the internal pockets are void.

In a further embodiment of any of the foregoing embodiments, exclusive of any internal micro-porosity in the seal arc segment, the internal pockets are non-surface connected.

In a further embodiment of any of the foregoing embodiments, the internal pockets are interconnected.

In a further embodiment of any of the foregoing embodiments, the internal pockets contain silicon carbide.

In a further embodiment of any of the foregoing embodiments, the surface layer is formed of a thermal barrier material selected form the group consisting of metal oxides, silicates, and combinations thereof.

In a further embodiment of any of the foregoing embodiments, the surface layer is formed of a metal alloy.

In a further embodiment of any of the foregoing embodiments, the surface layer is selectively frangible such that upon break-away of the array of ridges of the surface layer, a pattern corresponding to the array of internal pockets remains.

In a further embodiment of any of the foregoing embodiments, the surface layer has a radial layer thickness defined between tips of the ridges and a distinct radially outer side of the surface layer. The ridges have a radial ridge thickness defined between the tips of the ridges and bases of the ridges, and the radial ridge thickness is at least 25% of the radial layer thickness.

In a further embodiment of any of the foregoing embodiments, the ridges are circumferentially elongated.

A gas turbine engine according to an example of the present disclosure includes a rotor that has a row of rotor blades rotatable about an axis, and a blade outer air seal radially outwards of the row of rotor blades. The blade outer air seal includes a plurality of seal arc segments. Each of the plurality of seal arc segments has a surface layer and an array of internal pockets. The surface layer defines a radially inner side of the seal arc segment. The surface layer is conformal with the array of internal pockets such that the surface layer includes an array of ridges corresponding in location and shape to the array of internal pockets.

In an embodiment of the foregoing embodiment, the internal pockets are void.

In a further embodiment of any of the foregoing embodiments, exclusive of any internal micro-porosity in the seal arc segment, the internal pockets are non-surface connected.

In a further embodiment of any of the foregoing embodiments, the internal pockets are interconnected.

In a further embodiment of any of the foregoing embodiments, the internal pockets contain silicon carbide.

In a further embodiment of any of the foregoing embodiments, the surface layer has a radial layer thickness defined between tips of the ridges and a distinct radially outer side of the surface layer. The ridges have a radial ridge thickness defined between the tips of the ridges and bases of the ridges, and the radial ridge thickness is at least 25% of the radial layer thickness.

A method for fabricating a blade outer air seal according to an example of the present disclosure includes providing template on a seal arc segment, and applying a surface layer over the template to form a radially inner side of the seal arc segment. The surface layer conforms with the template to produce an array of internal pockets occupied by the template and an array of ridges corresponding in location and shape to the array of internal pockets.

An embodiment of the foregoing embodiment includes thermally removing the template such that the pockets are void.

In a further embodiment of any of the foregoing embodiments, the template is formed of graphite.

In a further embodiment of any of the foregoing embodiments, the template is formed of silicon carbide.

### BRIEF DESCRIPTION OF THE DRAWINGS

The various features and advantages of the present disclosure will become apparent to those skilled in the art from the following detailed description. The drawings that accompany the detailed description can be briefly described as follows.
Figure 1 illustrates an example gas turbine engine.
Figure 2 illustrates an axial view of the turbine section of the engine and a portion of a blade outer air seal.
Figure 3 illustrates an example of a representative one of a seal arc segment.
Figure 4 illustrates a sectioned view of a seal arc segment.
Figure 5 illustrates another example of a seal arc segment with silicon carbide in the internal pockets.
Figure 6 illustrates another example of a seal arc segment with a circumferential pattern of ridges.
Figure 7 illustrates another example of a seal arc segment with a sloped pattern of ridges.
Figure 8 illustrates a seal arc segment prior to use and breaking-away of the ridges by the blades.
Figure 9 illustrates the seal arc segment after use in an engine where the blades have broken-away the ridges of the seal arc segment.
Figure 10 illustrates a radial view of a seal arc segment after the breaking-away of the ridges and the resulting pattern formed by the remaining internal pockets of the seal arc segment.
Figure 11 illustrates a method for fabricating a blade outer air seal.

### DETAILED DESCRIPTION

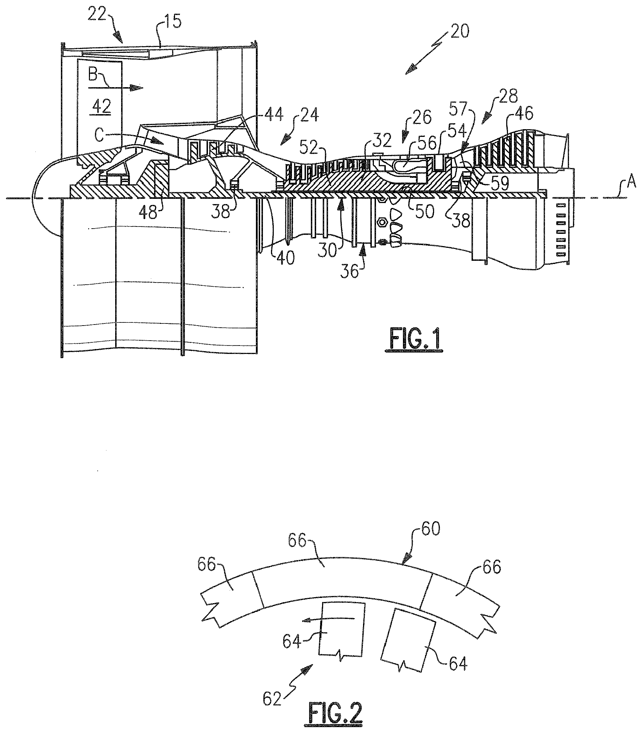

Figure 1 schematically illustrates a gas turbine engine 20. The gas turbine engine 20 is disclosed herein as a two-spool turbofan that generally incorporates a fan section 22, a compressor section 24, a combustor section 26 and a turbine section 28. Alternative engine designs can include an augmentor section (not shown) among other systems or features.

The fan section 22 drives air along a bypass flow path B in a bypass duct defined within a nacelle 15, while the compressor section 24 drives air along a core flow path C for compression and communication into the combustor section 26 then expansion through the turbine section 28. Although depicted as a two-spool turbofan gas turbine engine in the disclosed non-limiting embodiment, the examples herein are not limited to use with two-spool turbofans and may be applied to other types of turbomachinery, including direct drive engine architectures, three-spool engine architectures, and ground-based turbines.

The engine 20 generally includes a low speed spool 30 and a high speed spool 32 mounted for rotation about an engine central longitudinal axis A relative to an engine static structure 36 via several bearing systems 38. It should be understood that various bearing systems 38 at various locations may alternatively or additionally be provided, and the location of bearing systems 38 may be varied as appropriate to the application.

The low speed spool 30 generally includes an inner shaft 40 that interconnects a fan 42, a first (or low) pressure compressor 44 and a first (or low) pressure turbine 46. The inner shaft 40 is connected to the fan 42 through a speed change mechanism, which in exemplary gas turbine engine 20 is illustrated as a geared architecture 48, to drive the fan 42 at a lower speed than the low speed spool 30.

The high speed spool 32 includes an outer shaft 50 that interconnects a second (or high) pressure compressor 52 and a second (or high) pressure turbine 54. A combustor 56 is arranged between the high pressure compressor 52 and the high pressure turbine 54. A mid-turbine frame 57 of the engine static structure 36 is arranged generally between the high pressure turbine 54 and the low pressure turbine 46. The mid-turbine frame 57 further supports the bearing systems 38 in the turbine section 28. The inner shaft 40 and the outer shaft 50 are concentric and rotate via bearing systems 38 about the engine central longitudinal axis A, which is collinear with their longitudinal axes.

The core airflow is compressed by the low pressure compressor 44 then the high pressure compressor 52, mixed and burned with fuel in the combustor 56, then expanded over the high pressure turbine 54 and low pressure turbine 46. The mid-turbine frame 57 includes airfoils 59 which are in the core airflow path C. The turbines 46, 54 rotationally drive the respective low speed spool 30 and high speed spool 32 in response to the expansion. It will be appreciated that each of the positions of the fan section 22, compressor section 24, combustor section 26, turbine section 28, and fan drive gear system 48 may be varied. For example, gear system 48 may be located aft of combustor section 26 or even aft of turbine section 28, and fan section 22 may be positioned forward or aft of the location of gear system 48.

The engine 20 in one example is a high-bypass geared aircraft engine. In a further example, the engine 20 bypass ratio is greater than about six, with an example embodiment being greater than about ten, the geared architecture 48 is an epicyclic gear train, such as a planetary gear system or other gear system, with a gear reduction ratio of greater than about 2.3 and the low pressure turbine 46 has a pressure ratio that is greater than about five. In one disclosed embodiment, the engine 20 bypass ratio is greater than about ten, the fan diameter is significantly larger than that of the low pressure compressor 44, and the low pressure turbine 46 has a pressure ratio that is greater than about five. Low pressure turbine 46 pressure ratio is pressure measured prior to inlet of low pressure turbine 46 as related to the pressure at the outlet of the low pressure turbine 46 prior to an exhaust nozzle. The geared architecture 48 may be an epicycle gear train, such as a planetary gear system or other gear system, with a gear reduction ratio of greater than about 2.3:1. It should be understood, however, that the above parameters are only exemplary of one embodiment of a geared architecture engine and that the present invention is applicable to other gas turbine engines, including direct drive turbofans.

A significant amount of thrust is provided by the bypass flow B due to the high bypass ratio. The fan section 22 of the engine 20 is designed for a particular flight condition -- typically cruise at about 0.8 Mach and about 35,000 feet (10,668 m). The flight condition of 0.8 Mach and 35,000 ft (10,668 m), with the engine at its best fuel consumption - also known as "bucket cruise Thrust Specific Fuel Consumption ('TSFC')" - is the industry standard parameter of lbm of fuel being burned divided by lbf of thrust the engine produces at that minimum point. "Low fan pressure ratio" is the pressure ratio across the fan blade alone, without a Fan Exit Guide Vane ("FEGV") system. The low fan pressure ratio as disclosed herein according to one non-limiting embodiment is less than about 1.45. "Low corrected fan tip speed" is the actual fan tip speed in ft/sec divided by an industry standard temperature correction of [(Tram °R) / (518.7 °R)]^{0.5} (where °R = K x ⁹/₅). The "Low corrected fan tip speed" as disclosed herein according to one non-limiting embodiment is less than about 1150 ft / second (350.5 m/s).

Figure 2 illustrates an axial view through a portion of one of the stages of the turbine section 28. In this example, the turbine section 28 includes a blade outer air seal 60 that is located radially outwards of a rotor 62 that has a row of rotor blades 64. As can be appreciated, the blade outer air seal 60 can alternatively be adapted for other portions of the engine 20, such as the compressor section 24. The blade outer air seal 60 includes a plurality of seal arc segments 66 that are circumferentially arranged in an annulus around the central axis A of the engine 20. The blade outer air seal 60 is in close radial proximity to the tips of the blades 64, to reduce the amount of gas flow that escapes around the blades 64.

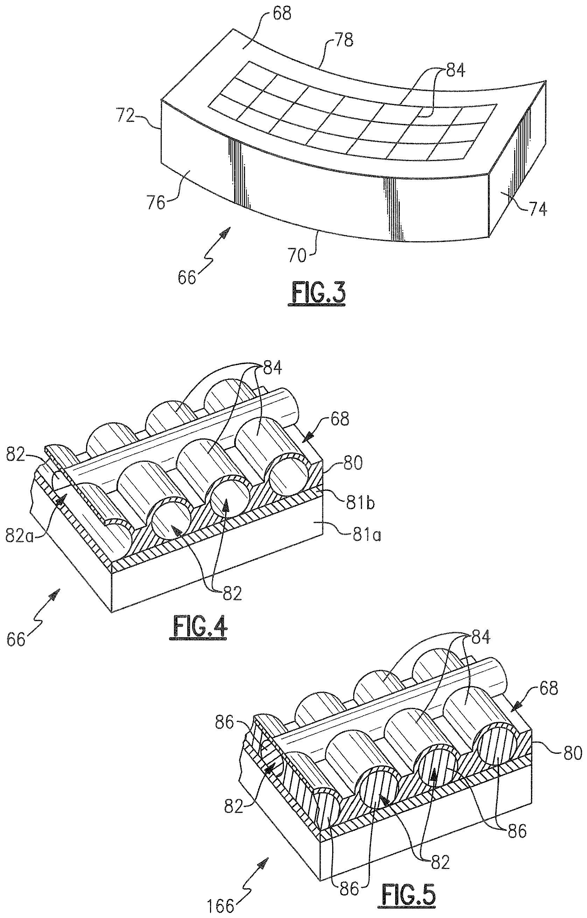

Figure 3 shows an isolated view of a representative one of the seal arc segment 66. Generally, the seal arc segment 66 includes a radially inner side 68 that faces toward the blades 64, a radially outer side 70, circumferential ends 72/74, and axial sides 76/78.

Figure 4 shows a perspective sectioned view of a portion of the seal arc segment 66. The seal arc segment 66 includes a surface layer 80 that defines the radially inner side 68 of the seal arc segment 66. The surface layer 80 can be formed of a thermal barrier material, such as a ceramic material or a metallic alloy material. For use in the turbine section 28, the material may be ceramic material, such as but not limited to, stabilized zirconia (e.g., yttria stabilized zirconia, gadolinia stabilized zirconia), silicates, or metal oxides such as hafnia or yttria.

In this example, the surface layer 80 is disposed on a substrate 81 a, which may be formed of a metallic alloy, such as a nickel-based alloy. Optionally, if desired to facilitate bonding to the substrate 81a, a bond layer 81b may also be used. An example bond layer 81b for ceramic materials is MCrAlY, where M includes at least one of nickel or cobalt, Cr is chromium, Al is aluminum, and Y is yttrium.

The seal arc segment 66 includes an array of internal pockets 82. The surface layer 80 is conformal with the array of internal pockets 82 such that the surface layer 80 includes an array of ridges 84 that correspond in location and shape to the array of internal pockets 82. In this example, the internal pockets 82 are interconnected, as represented at 82a. The internal pockets 82 are void and thus do not include any solid material therein. Furthermore, unlike cooling flow passages in other seal designs that may be openly connected to radially outer or inner surfaces for transporting air flow, the internal pockets 82 disclosed herein are, exclusive of any internal micro-porosity in the seal arc segment 66, non-surface connected. For example, the internal pockets 82 are closed from receiving or discharging any air flow into or out of the seal arc segment 66.

The ridges 84 of the surface layer 80 provide aerodynamic sealing around the tips of the blades 64. Typically, seals are formed of relatively hard materials to resist erosion. However, hard materials can wear and/or cause melting of the blade tips, which may create a wider gap between the seal and blade tips that reduces aerodynamic efficiency. If softer materials are used for the seal to reduce blade tip wear and melting, the soft material more easily erodes away, again creating a wider gap. The surface layer 80 with the ridges 84 enables hard materials to be used for good erosion resistance, yet due to the pockets 82 the surface layer 80 is frangible and can break-away upon contact with the tips of the blades 64. The breaking-away reduces wear and melting of the tips of the blades 64, and the remaining portions of the pockets 82 still provide aerodynamic sealing.

Figure 5 illustrates a modified example of a seal arc segment 166. In this example, rather than the internal pockets 82 being void, the internal pockets 82 contain silicon carbide 86. For example, the silicon carbide 86 is in the form of silicon carbide fibers. Generally, the silicon carbide 86 has a greater thermal conductivity than the material of the surface layer 80. The greater thermal conductivity facilitates the removal of heat from the radially inner side 68 and thus facilitates maintaining the seal arc segment 166 within acceptable thermal limits.

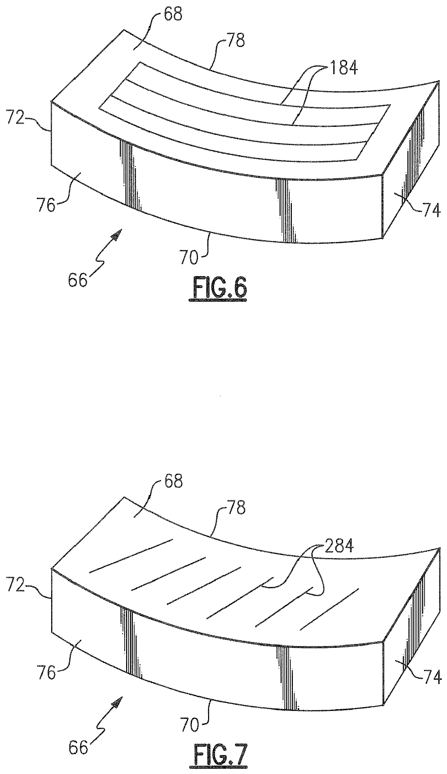

As can be appreciated (see Figure 3), the pattern formed by the array of ridges 84 can be selected to facilitate aerodynamic sealing around the tips of the blades 64. The pattern facilitates the creation of trenches that, in turn, facilitate a reduction in aerodynamic flow around the tips of the blades 64. For example, the array of ridges 84 in Figure 3 forms a grid pattern. Figure 6 shows another example pattern of an array of ridges 184. In this example, the array of ridges 184 are elongated in the circumferential direction and there are no ridges in the axial direction. Figure 7 illustrates another modified example of an array of ridges 284. In this example, the ridges 284 are sloped with regard to the circumferential direction and the axial direction.

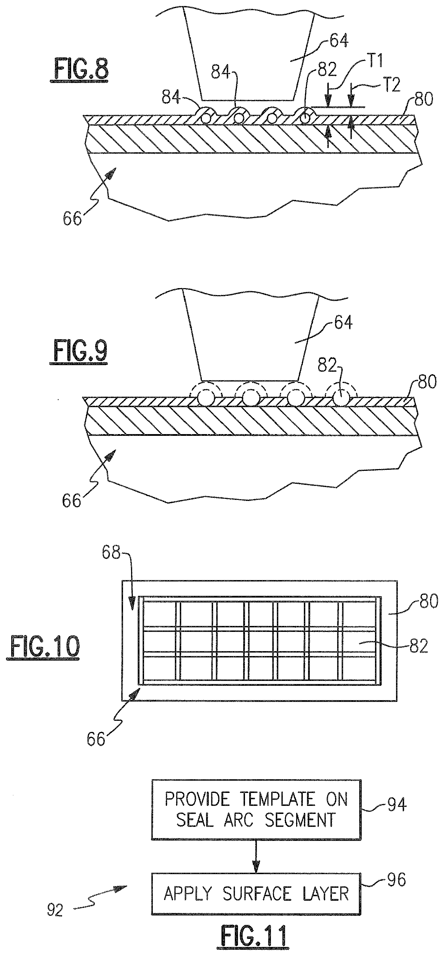

The tips of the blades 64 may contact the ridges 84/184/284 and break-away the tops of the ridges 84/184/284 to form a pattern corresponding to the array of internal pockets 82. Figure 8 illustrates the seal arc segment 66 prior to operation in the engine or, at least, with limited operation in the engine 20 prior to substantial contact between the tips of the blades 64 and the ridges 84. The ridges 84 thus serve to reduce the escape of air flow around the tips of the blades 64.

Upon expansion of the blades 64, such as from circumferential loads and/or thermal expansion, the tips of the blades 64 can contact the ridges 84. In this regard, the surface layer 80 is selectively frangible as shown in Figure 9 such that upon break-away of the ridges 84 of the surface layer 80, the internal pockets 82 become exposed to the core gas path. As shown in the radial view of Figure 10, the internal pockets 82 leave a residual pattern, which in this example is a grid pattern corresponding to the grid pattern of the initial ridges 84. Thus, even though the tips of the blades 64 have broken away the ridges 84, the internal pockets 82 provide trenches that continue to resist air flow around the tips of the blades.

In a further example, the surface layer 80 has a controlled thickness to facilitate frangibility, aerodynamic sealing, and fabrication. For instance, the surface layer 80 has a radial layer thickness defined between tips of the ridges and a distinct radially outer side of the surface layer 80. This thickness is represented at T1. The ridges 84 have a radial ridge thickness defined between the tips of the ridges and bases of the ridges. This thickness is represented at T2. In one example, the radial ridge thickness T2 is at least 25% of the radial layer thickness T1. This ensures that the surface layer 80 is able to bridge over the pockets 82 and also provide a substantial height difference from the trenches between the ridges 84. Therefore, the ridges 84 provide surface protrusions that are substantially different in magnitude from the random surface roughness of the surface layer 80. Of course, if the thicknesses T1 and T2 are too thick, ridges 84 may not fracture from interaction with the tips of the blades 64. In one example, the thickness T1 is approximately 125 micrometers to approximately 600 micrometers.

Figure 11 illustrates an example method 92 for fabricating a blade outer air seal disclosed herein. In this example, the method 92 includes steps 94 and 96. Step 94 includes providing a template on a seal arc segment and step 96 includes applying the surface layer over the template to form the radially inner side of the seal arc segment. For example, the template is a fibrous sheet. Depending upon whether the internal pockets will be void or occupied by silicon carbide material, the template may be formed of a sacrificial material or silicon carbide. For instance, the sacrificial material can be graphite. In this case, a fibrous graphite sheet, such as a carbon fiber fabric, can be used as the template. The surface layer is applied over the template. For instance, the surface layer can be applied by plasma spray deposition of the material selected for the surface layer. As the material is deposited, it fills in the spaces between the fibers of the template and also deposits over the fibers of the template to form the surface layer. Upon completion of the deposition of the surface layer, seal arc segments can then be thermally treated in air at a temperature above about approximately 800°C to thermally remove the template, if formed of graphite. Alternatively, if the template is silicon carbide and is to remain, no thermal treatment is conducted.

Although a combination of features is shown in the illustrated examples, not all of them need to be combined to realize the benefits of various embodiments of this disclosure. In other words, a system designed according to an embodiment of this disclosure will not necessarily include all of the features shown in any one of the Figures or all of the portions schematically shown in the Figures. Moreover, selected features of one example embodiment may be combined with selected features of other example embodiments.

The preceding description is exemplary rather than limiting in nature. Variations and modifications to the disclosed examples may become apparent to those skilled in the art that do not necessarily depart from this disclosure. The scope of legal protection given to this disclosure can only be determined by studying the following claims.

## Claims

1. A blade outer air seal (60) comprising:
a seal arc segment (66;166) having a surface layer (80) and an array of internal pockets (82), the surface layer (80) defining a radially inner side (68) of the seal arc segment (66;166), the surface layer (80) being conformal with the array of internal pockets (82) such that the surface layer (80) includes an array of ridges (84;184;284) corresponding in location and shape to the array of internal pockets (82).

2. The blade outer air seal as recited in claim 1, wherein the internal pockets (82) are void.

3. The blade outer air seal as recited in claim 1, wherein the internal pockets (82) contain silicon carbide (86).

4. The blade outer air seal as recited in claim 1, 2 or 3, wherein, exclusive of any internal micro-porosity in the seal arc segment (66;166), the internal pockets (82) are non-surface connected.

5. The blade outer air seal as recited in any preceding claim, wherein the internal pockets (82) are interconnected.

6. The blade outer air seal as recited in any preceding claim, wherein the surface layer (80) is formed of a thermal barrier material selected form the group consisting of metal oxides, silicates, and combinations thereof.

7. The blade outer air seal as recited in any of claims 1 to 5, wherein the surface layer (80) is formed of a metal alloy.

8. The blade outer air seal as recited in any preceding claim, wherein the surface layer (80) is selectively frangible such that upon break-away of the array of ridges (84;184;284) of the surface layer (80), a pattern corresponding to the array of internal pockets (82) remains.

9. The blade outer air seal as recited in any preceding claim, wherein the surface layer (80) has a radial layer thickness (T1) defined between tips of the ridges (84;184;284) and a distinct radially outer side of the surface layer (80), the ridges (84;184;284) have a radial ridge thickness (T2) defined between the tips of the ridges (84;184;284) and bases of the ridges (84;184;284), and the radial ridge thickness (T2) is at least 25% of the radial layer thickness (T1).

10. The blade outer air seal as recited in any preceding claim, wherein the ridges (84;184;284) are circumferentially elongated.

11. A gas turbine engine (20) comprising:
a rotor (62) including a row of rotor blades (64) rotatable about an axis (A); and
a blade outer air seal (60) of any preceding claim radially outwards of the row of rotor blades (64), the blade outer air seal (60) including a plurality of said seal arc segments (66;166).

12. A method for fabricating a blade outer air seal (60), the method comprising:
providing template on a seal arc segment (66;166); and
applying a surface layer (80) over the template to form a radially inner side (68) of the seal arc segment (66;166), the surface layer (80) conforming with the template to produce an array of internal pockets (82) occupied by the template and an array of ridges (84;184;284) corresponding in location and shape to the array of internal pockets (82).

13. The method as recited in claim 12, further comprising thermally removing the template such that the pockets (82) are void.

14. The method as recited in claim 12 or 13, wherein the template is formed of graphite.

15. The method as recited in claim 12 or 13, wherein the template is formed of silicon carbide (86).
